# DEMANDE DE BREVET EUROPEEN

(11) **EP 1 270 131 A1**
(43) Date de publication de la demande: **02.01.2003**
(21) Numéro de dépôt: 02013236.1
(22) Date de dépôt: 17.06.2002
(51) Int. Cl.: B23K 3/06

(54) **Dispositif de brasage a la vague pour cartes electroniques cablees**

(30) Priorité: 20.06.2001 FR 0108151
(71) Demandeur: Val, Bernard, 60131 Valescourt (FR); Val, Annemarie, 60131 Valescourt (FR)
(72) Inventeur: Val, Bernard, 60131 Valescourt (FR)
(74) Mandataire: Vièl, Frédérique (FR)

(57) **Abrégé**

L'invention concerne un dispositif de brasage à la vague pour cartes électroniques câblées, à partir d'un réservoir destiné à contenir de la soudure liquide, d'une colonne montante (1) dirigée vers le haut, dont l'extrémité inférieure communique avec le réservoir et dont l'extrémité supérieure s'ouvre sur une plaque perforée (2) munie de plusieurs orifices de débordement (9) de soudure liquide disposés transversalement par rapport au trajet de la carte électronique afin que la soudure liquide qui en déborde et qui est destinée à entrer en contact avec la carte électronique, puisse former une vague turbulente et qui s'écrase au passage d'une carte électronique.

Dans le but de permettre à moindre coût une variation du temps de contact entre la face inférieure de la carte à circuits imprimés et l'onde de soudure, il est proposé de prévoir des moyens (5, 6) pour faire varier l'angle de la surface de la plaque perforée (2) par rapport à l'horizontale.

## Description

L'invention concerne un dispositif de brasage à la vague pour cartes électroniques câblées, comprenant
- un support destiné à guider la soudure fondue, en
- une colonne montante dirigée vers le haut, dont l'extrémité inférieure communique avec un réservoir et dont l'extrémité supérieure s'ouvre sur
- une plaque perforée munie de plusieurs orifices de débordement disposés transversalement par rapport au trajet des cartes électroniques câblées afin que l'alliage liquide traversant ces orifices puissent former une vague turbulente destinée à entrer en contact avec les circuits imprimés.

Un tel dispositif est présenté dans le document EP 0 380 382 A1 qui décrit une buse dont le volet arrière est articulé autour d'un axe de sorte que la coulée arrière, qui était empêchée par le bord libre de ce volet, puisse s'effectuer néanmoins de manière intermittente.

La demande EP 0 159 425 A1 présente une buse cylindrique qui comporte des trous arrangés en zigzag sur un premier et un second arrangements qui sont parallèles et décalés l'un par rapport à l'autre.

Le brevet DE 43 29 000 C2 décrit un autre arrangement des orifices.

Dans le document US 5,772,101 A, un dispositif de brasage à la vague est décrit qui permet de varier la vitesse d'écoulement de la soudure au moyen d'une paroi pivotante. Ce dispositif possède une plaque perforée servant à lisser le flux de soudure.

Les buses connues présentent plusieurs inconvénients : d'une part, les orifices des buses ont tendance à se boucher et leur nettoyage est relativement long et difficile. D'autre part, il est difficile de faire varier le temps de contact qui dépend de la largeur de la vague dans le sens de déplacement de la carte. Pourtant, une telle variation permettrait le brasage de cartes électroniques différentes avec un même dispositif de soudure ce qui pourrait augmenter la souplesse de production de ces cartes.

Le but de la présente invention est donc de permettre à moindre coût une variation du temps de contact entre la face inférieure de la carte à circuits imprimés et la vague de brasage.

Ce but est atteint conformément à l'invention par un dispositif selon le préambule qui se caractérise par le fait que des moyens sont prévus pour faire varier l'angle de la surface de la plaque perforée par rapport à l'horizontale.

Ceci constitue un moyen fiable pour permettre une variation du temps de contact en faisant varier la largeur de contact. De plus, le nettoyage de la plaque perforée est facilité par le fait qu'elle peut être basculée et nettoyée par sa face inférieure.

Il est conforme à l'invention que l'angle de la surface de la plaque perforée par rapport à l'horizontale varie entre 0° et 9°.

Cette variation permet une gamme de largeurs de contact suffisante. Il est cependant favorable de permettre un basculement de 90° ou plus de la plaque perforée pour en faciliter le nettoyage.

Dans une variante de l'invention, la plaque perforée est fixée sur un élément d'orientation qui comprend latéralement des axes permettant de faire varier l'angle de la surface de la plaque perforée par rapport à l'horizontale.

La variation de l'angle de la surface de la plaque perforée par rapport à l'horizontale se fait donc par un pivotement autour des axes latéraux de l'élément d'orientation sur lequel celle-ci est fixée.

Il est possible de prévoir un moteur pour faire varier l'angle de la surface de la plaque perforée par rapport à l'horizontale.

Ce moteur peut être commandé par un système de gestion de la production qui, en fonction de la largeur de contact souhaitée, incline plus ou moins la plaque perforée.

Dans une forme privilégiée de l'invention, un volet avant et un volet arrière sont reliés à l'élément d'orientation.

Ainsi, les volets coopèrent avec l'élément d'orientation de la plaque perforée en l'accompagnant dans son mouvement de sorte que les arrêtes supérieures des volets soient sensiblement alignées avec la surface de la plaque perforée.

Il est possible de prévoir que les volets puissent être écartés latéralement permettant l'utilisation d'une plaque perforée plus large.

Il est conforme à l'invention que les orifices de la plaque perforée soient coniques, le diamètre le plus petit se situant sur la partie supérieure de la plaque perforée.

Ce profil des orifices évite de façon efficace qu'ils ne se bouchent.

Il est conforme à l'invention de prévoir un canal de contrôle de niveau s'étendant parallèlement aux orifices de la plaque perforée.

Ce canal permet de constater de manière simple et rapide, à l'oeil nu sans faire intervenir des instruments de mesure difficiles à manipuler, si le dispositif est incliné transversalement, ce qui empêcherait un brasage de bonne qualité.

Il est également préférable que la plaque perforée soit en acier inoxydable.

Ce matériau sur lequel la soudure n'adhère que très peu diminue encore les efforts de nettoyage du dispositif.

Un exemple non limitatif de réalisation est décrit ci-dessous en référence aux figures suivantes :
- Fig. 1: vue latérale d'un élément d'orientation muni d'une plaque perforée et de volets avant et arrière sans inclinaison ;
- Fig. 2: vue latérale d'un élément d'orientation muni d'une plaque perforée et de volets avant et arrière avec une inclinaison de 9°
- Fig. 3: vue de dessus des pièces présentées aux figures 1 et 2 et
- Fig. 4: vue latérale d'un élément d'orientation muni d'une plaque perforée plus large et de volets avant et arrière réglables.

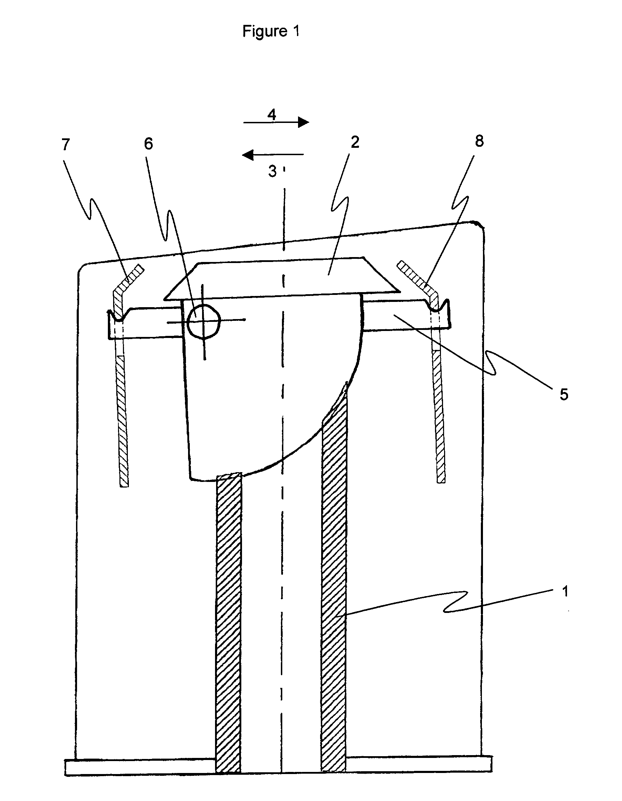

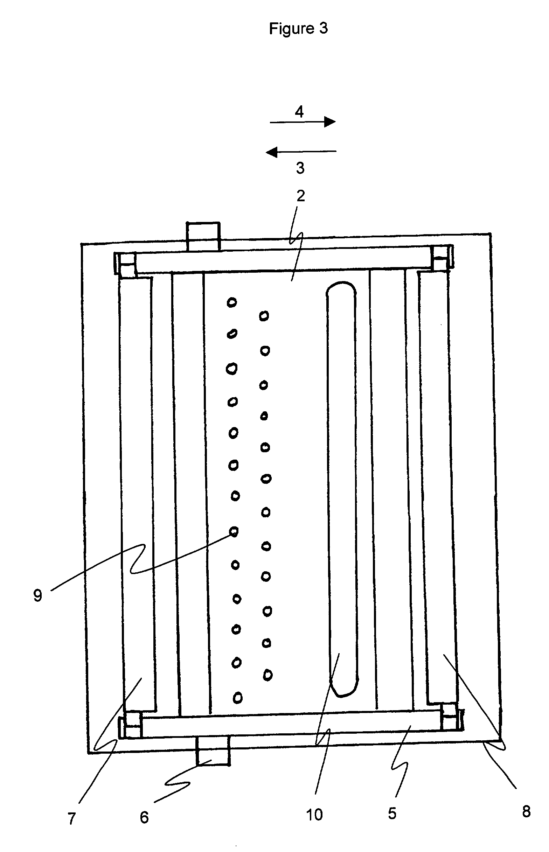

Comme le montrent les figures 1 à 3, le dispositif de l'invention comprend un support (1) vertical dans laquelle la soudure monte en raison de la pression exercée par une pompe non représentée. A l'extrémité supérieure du support (1) se trouve un élément d'orientation (5) et au-dessus, la plaque perforée (2). A son niveau, la circulation de la soudure liquide s'effectue vers l'amont (flèche 3) quand la plaque perforée est inclinée d'un certain angle, autrement dit vers l'avant de la plaque perforée (2) : c'est la vague de soudure qui vient lécher la face inférieure du circuit imprimé qui, quant à elle, circule de l'amont vers l'aval (flèche 4).

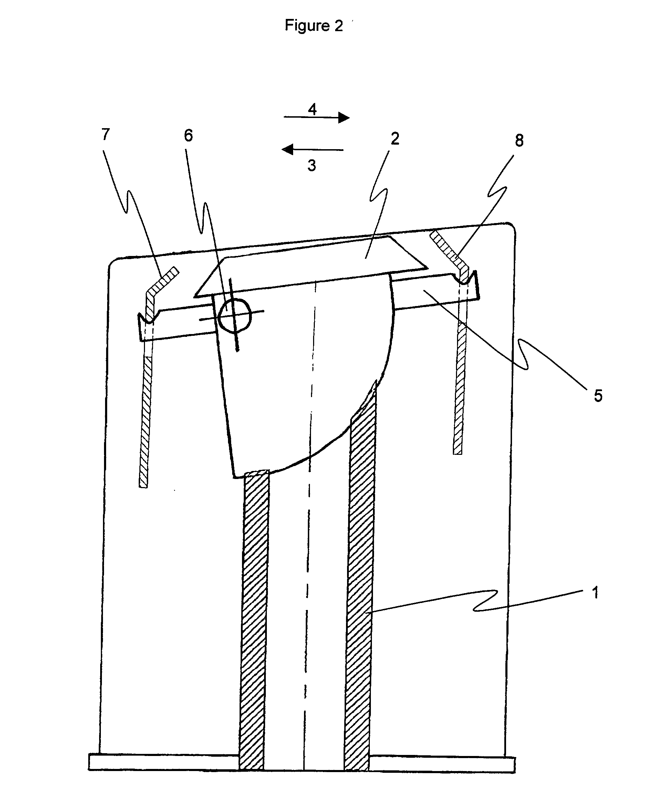

La plaque perforée (2) est fixée (par ex. au moyen de vis) sur un élément d'orientation (5) qui présente latéralement des axes (6) placés dans des paliers du boîtier dans desquels ils peuvent pivoter. L'angle de pivotement lors du procédé de brasage varie de 0° comme le montre la figure 1 (la surface de la plaque perforée (2) est alors horizontale) à 90° environ comme le montre le figure 2, le côté amont de la plaque perforée (2) étant alors plus bas que le côté aval. Ce pivotement influe sur la largeur de contact et donc sur le temps de contact, permettant d'adapter celui-ci aux besoins des cartes électroniques en cours de fabrication. L'élément d'orientation (5) peut pivoter à l'aide d'un moteur (non représenté) relié à l'un des axes (6) ce qui permet l'automatisation de la fabrication des cartes. Pour le nettoyage de la plaque perforée (2), l'élément d'orientation peut basculer de 90° ou plus par rapport à l'horizontale, ce qui permet d'accéder à la face inférieure de la plaque perforée (2) sans être obligé de la démonter.

L'élément d'orientation (5) porte également deux volets, un volet amont (7) et un volet aval (8). Ils suivent le pivotement de celui-ci et de la plaque perforée (2).

Les trous (9) de la plaque perforée (2), arrangés en quinconce, ont une forme conique qui s'évase de la surface de la plaque perforée (2) vers la face inférieure. Ceci diminue le risque de bouchage des trous (9). De plus, la plaque perforée (2) peut être fabriquée en acier inoxydable, qui a la propriété de réduire l'attachement de la soudure.

La plaque perforée (2) peut présenter un canal de contrôle de niveau (10) parallèle aux rangées de trous afin de pouvoir détecter à l'oeil nu un dénivellement latéral du dispositif.

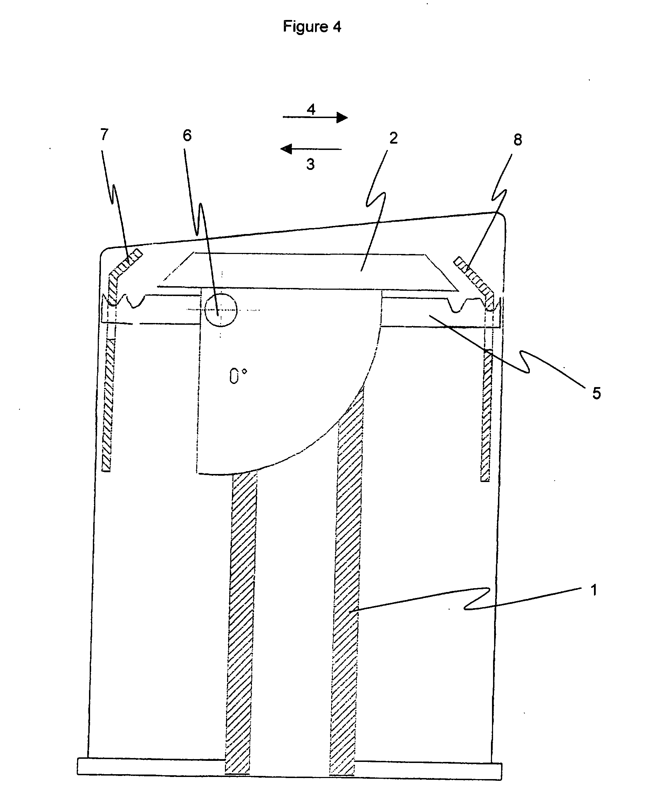

Il est possible de prévoir des volets (7, 8) pouvant être écartés longitudinalement sur l'élément d'orientation (5) tel que présenté sur la figure 4. Ceci permet l'utilisation d'une plaque perforée (2) plus large.

## Revendications

1. Dispositif de brasage à la vague pour cartes électroniques câblées, comprenant
- un support (1) destiné à guider la soudure fondue, en
- une colonne montante dirigée vers le haut, dont l'extrémité inférieure communique avec un réservoir et dont l'extrémité supérieure s'ouvre sur
- une plaque perforée (2) munie de plusieurs orifices de débordement (9) disposés transversalement par rapport au trajet des cartes électroniques câblées afin que l'alliage liquide traversant ces orifices puissent former une vague turbulente destinée à entrer en contact avec les circuits imprimés,
**caractérisé en ce que** des moyens (5, 6) sont prévus pour faire varier l'angle de la surface de la plaque perforée (2) par rapport à l'horizontale.

2. Dispositif selon la revendication 1, **caractérisé en ce que** l'angle de la surface de la plaque perforée (2) par rapport à l'horizontale peut varier entre 0° et 9°.

3. Dispositif selon la revendication 1, **caractérisé en ce que** la plaque perforée (2) est fixée sur un élément d'orientation (5) qui comprend latéralement des axes (6) permettant de faire varier l'angle de la surface de la plaque perforée (2) par rapport à l'horizontale.

4. Dispositif selon la revendication 3, **caractérisé en ce qu'il** est prévu un moteur pour faire varier l'angle de la surface de la plaque perforée (2) par rapport à l'horizontale.

5. Dispositif selon la revendication 3, **caractérisé en ce qu'un** volet avant (7) et un volet arrière (8) sont placés sur l'élément d'orientation (5) de la plaque perforée (2) positionnés suivant sa largeur.

6. Dispositif selon la revendication 5, **caractérisé en ce que** les volets (7, 8) peuvent être écartés longitudinalement.

7. Dispositif selon la revendication 1, **caractérisé en ce que** les orifices (9) de la plaque perforée (2) sont coniques, le diamètre le plus petit se situant sur sa partie supérieure.

8. Dispositif selon la revendication 1, **caractérisé en ce qu'il** est prévu un canal de contrôle de niveau (10) s'étendant parallèlement aux orifices (9) de la plaque perforée (2).

9. Dispositif selon la revendication 1, **caractérisé en ce que** la plaque perforée (2) est en acier inoxydable.
